## Europäisches Patentamt

## European Patent Office

## Office européen des brevets

(11) Veröffentlichungsnummer: **0 115 297**
**A2**

(12) # EUROPÄISCHE PATENTANMELDUNG

(21) Anmeldenummer: **84100522.6**

(22) Anmeldetag: **19.01.84**

(51) Int. Cl.³: **B 62 B 15/00**
**B 62 B 17/08**

(30) Priorität: **28.01.83 CH 493/83**

(43) Veröffentlichungstag der Anmeldung:
**08.08.84 Patentblatt 84/32**

(84) Benannte Vertragsstaaten:
**BE DE FR GB IT LU NL SE**

(71) Anmelder: **Schuler, Josef**
**Grossarni**
**CH-6403 Küssnacht(CH)**

(72) Erfinder: **Schuler, Josef**
**Grossarni**
**CH-6403 Küssnacht(CH)**

(74) Vertreter: **Patentanwaltsbureau Scheidegger, Zwicky &**
**Co.**
**Stampfenbachstrasse 48 Postfach**
**CH-8023 Zürich(CH)**

(54) **Sportgerät.**

(57) Das Sportgerät (1) zum Abfahren auf schneebedeckten Hängen weist einen Sitzteil (6) und einen auf dessen Längsachse nach vorn schräg aufwärts sich erstreckenden Holm (7) auf, die zusammen einen formsteifen Körper bilden. Dieser lässt sich durch Erfassen eines Griffs (9, 10) am vorderen Ende des Holms (7) lenken und durch Ziehen nach hinten bremsen, wobei der Körper nach hinten auf eine Bremskante (8) gekippt wird, die sich über die ganze Breite des Sitzteils (6) erstreckt. Der Sitzteil (6) und der Holm (7) bestehen aus zwei durch Schrauben (5) miteinander verbundenen Kunststoffschalen (2, 3), die ein Luftvolumen zwischen sich einschliessen, wodurch eine gute Isolierung gegen die Bodenkälte und ein Schutz vor Verletzungen beim Auffahren auf Hindernisse erreicht wird.

FIG. 1

Croydon Printing Company Ltd.

## Sportgerät

Die Erfindung betrifft ein Sportgerät, bestehend aus einer gleitfähigen Sitzunterlage, zum Abfahren auf schneebedeckten Hängen. Als gleitfähige Sitzunterlage werden sehr verschiedene, mehr oder weniger geeignete Mittel verwendet, angefangen bei den von Jugendlichen verwendeten Plastik-Tragtaschen, auf denen die Jugendlichen sitzend Schneehänge herunterrutschen, bei welcher einfachsten und billigsten Methode jedoch verschiedene Nachteile in Kauf genommen werden müssen, denn man kann hierbei weder steuern und auch nicht bremsen, noch bietet eine Tragtasche Schutz vor Kälte von unten und auch keinen Schutz, wenn man auf Hindernisse wie Steine oder Aeste auffährt. Man hat diesen Schlitten-Ersatz auch bereits etwas verbessert und eine nur für das Herunterrutschen an Schneehängen bestimmte Sitzunterlage mit einem an einer sich nach vorn erstreckenden Verlängerung ausgebildeten Handgriff geschaffen, welches Mittel jedoch die gleichen vorerwähnten Nachteile aufweist, ausser dass die Unterlage etwas dicker ist. Es sind ferner Kunststoff-Schalenbobs mit oder ohne Steuerbügel bekannt, die je nach Ausgestaltung einen etwas besseren Schutz gegen Kälte bieten, der jedoch wieder mangelhaft ist, wenn bei einer billigen Ausführung des Bobs dieser mit der ganzen Fläche im weichen Schnee aufliegt. Das Steuern und Bremsen mit den Steuerhebeln dieser Schalenbobs ist nicht ungefährlich, wenn eine ungleich grosse Zugkraft der beiden Arme zur Wirkung kommt, verursacht durch die unterschiedliche Kraft in beiden Armen, sodass der Bob dann seitlich ausschert, insbesondere auch dann, wenn die Unterlage zu beiden Seiten des Bobs nicht die gleiche Beschaffenheit aufweist, sodass durch den unbeabsichtigten Fahrtrichtungswechsel Stürze verursacht werden. Bessere Ausführungen dieser Gattung Skibob besitzen ein oder zwei steuerbare Kufen, die mit einem Lenkrad zu betätigen sind.

Diese Art Skibob lässt sich sicherer lenken, besitzt aber
schlechtere Bremsmöglichkeiten. Es ist ferner auch ein sehr
kurzer kleiner Bob bekannt, der einen ungefähr im Zentrum
des Bobs unmittelbar zwischen den Beinen nach oben ragenden
Steuerknüppel besitzt, der daher eine ziemliche Unfallgefahr darstellt, weil beim Auffahren auf Hindernissen dieser
Steuerknüppel in die Weichteile des Benutzers hineinstossen
kann. Auch muss wegen der Anordnung des Steuerknüppels nahe
des Schwerpunktes des Bobs zum Steuern viel Kraft aufgewendet
werden.

Ferner gibt es neben neuerdings auch aufblasbaren Bobs, die
nicht abgebremst werden können, die althergebrachten Holzschlitten mit Kufen, die in der Regel auch keine Einrichtung
zum Steuern und Bremsen besitzen.

Die der vorliegenden Erfindung zugrundeliegende Aufgabe bestand daher darin, eine als Sportgerät zum Abfahren auf schneebedeckten Hängen bestimmte gleitfähige Sitzunterlage zu
schaffen, die einfach in der Formgebung, klein und handlich
ist, damit für das Mitführen im PKW wenig Platz benötigt wird,
die einen guten Schutz gegen Kälte von unten und gegen Unfälle beim Auffahren gegen Bodenhindernisse bietet und die
sich bremsen und lenken lässt, wobei das Lenken durch Gewichtsverlagerung erfolgen soll, sodass mit der dafür allmählich
gewonnenen Routine ein sportliches Erlebnis gewonnen wird.
Um dies zu erreichen, ist das Sportgerät der eingangs genannten Art erfindungsgemäss dadurch gekennzeichnet, dass ein
auf der Schneeoberfläche aufzuliegen bestimmter Sitzteil und
ein auf dessen Längsachse nach vorn sich anschliessender Holm
einen zwischen dem Sitzteil und dem schräg aufwärts gerichteten
Holm einen stumpfen Winkel einschliessenden, formsteifen Körper
bilden, der am rückwärtigen Ende eine über die Breite des
genannten Sitzteils sich erstreckende Bremskante aufweist und der durch nach rückwärts gerichtetes Ziehen des Benutzers
am Ende des zum Festhalten und Lenken bestimmten und als Körperschutz wirkenden Holms zwecks Wirksamwerdenlassen der
Bremskante nach hinten kippbar ist. Die Bremswirkung kann
durch gleichzeitige Gewichtsverlagerlagerung unterstützt
werden.

Der formsteife Körper mit dem zwischen den Beinen des Benutzers sich schräg aufwärts nach vorn erstreckenden Holm bietet
für den Benutzer einen guten Schutz beim Auffahren gegen Bodenhindernisse, wie Steine oder Aeste, die nicht die Weichteile des Benutzers verletzen können. Der zum Festhalten und Lenken dienende Holm erstreckt sich vom Körper weg, so dass auch
dadurch nicht wie bei einem bekannten Skibob mit einem unmittelbar zwischen den Beinen nach oben sich erstreckenden
Steuerknüppel eine Verletzungsgefahr durch dieses Mittel zum
Lenken gegeben ist. Wenn der Benutzer am Holm zieht und sein
Gewicht nach hinten verlagert, wird durch erhebliche Verkleinerung der Gleitfläche bis zum "Kantenfahren" das Gerät abgebremst. Dafür ist es notwendig, eine über die ganze Breite des
Gerätes durchgehende Bremskante zur Verfügung zu haben, was
bei allen herkömmlichen Bobs oder einfachen Rutschgeräten
nicht der Fall ist. Durch seitliche Gewichtsverlagerung können Kurven gefahren oder Hindernisse umfahren werden.

In bevorzugter Weise bestehen der Sitzteil und der von diesem
nach vorn sich erstreckende Holm aus einer oberen und einer
unteren, jeweils flächenmässig Sitzteil und Holm umfassenden
Kunststoffschale, die ein Luftvolumen zwischen sich luftdicht
einschliessen. Dadurch ist eine ausserordentlich gute Isolierung gegen Kälte von unten gewährleistet und ausserdem
ein guter Schutz gegen Verletzungen gegeben, weil bei Beschädigung der untern Kunststoffschale immer noch im Abstand darüber die obere Kunststoffschale vorhanden ist, auf
welcher der Benutzer sitzt. Durch das eingeschlossene Luftvolumen zwischen den Kunststoffschalen wird das Gerät bei
Belastung federnd reagieren. Zweckmässig sind die Kunststoffschalen miteinander verschraubt und ist zwischen ihren umlaufenden Rändern eine Dichtungsschnur eingeklemmt gehalten.
Ferner kann eine der Kunststoffschalen am rückwärtigen
Seitenbord ein Ventil zum Einpressen von Druckluft zwischen
die Kunststoffschalen aufweisen. Dadurch kann der Federungseffekt noch zusätzlich reguliert werden.

In bevorzugter Weise ist ferner die untere Kunststoffschale
im Bereich des auf der Schneeoberfläche aufzuliegen bestimmten Sitzteils unterseitig mit einer Mehrzahl von durch beidseits der Längsachse spiegelsymmetrisch gleich angeordnete
Längsrinnen getrennten Gleitflächen versehen, von denen auf
gegenüberliegenden Seiten im gleichen Abstand von der Längssymmetrielinie angeordnete Gleitflächen auf gleichem Niveau
liegen und mindestens die der Längssymmetrielinie nächstliegenden Gleitflächen höher liegen als die am weitesten
aussenliegenden Gleitflächen.

Durch diese Ausgestaltung an der Unterseite der unteren
Kunststoffschale wird erreicht, dass sich das erfindungsgemässe Sportgerät den jeweils herrschenden Schneeverhältnissen automatisch anpasst, wobei auf einer harten Schneeunterlage das Gerät nur auf den äusseren Gleitflächen fährt,
während bei einer weicheren Schneeunterlage auch die weiter
innen bei der Längssymmetrielinie liegenden Gleitflächen
zum Tragen kommen, bis schliesslich auch bei sehr weicher
Schneeunterlage die Längsrinnen aufliegen.

Weitere Vorteile der Erfindung ergeben sich aus der nachfolgenden Beschreibung und den Zeichnungen, in denen eine
Ausführungsform des Erfindungsgegenstandes rein beispielsweise dargestellt ist. Es zeigen:

Fig. 1    eine schaubildliche Darstellung des aus zwei Kunststoffschalen bestehenden Sportgerätes;

Fig. 2    eine Draufsicht auf die Innenseite der unteren
          Kunststoffschale;

Fig. 3    einen Längsschnitt durch die untere Kunststoffschale gemäss der Linie II-II in Fig. 2;

Fig. 4    einen Querschnitt durch die untere Kunststoffschale gemäss der Linie III-III in Fig. 2;

Fig. 5    eine Draufsicht von oben auf die obere Kunststoffschale;

Fig. 6    einen Längsschnitt durch die obere Kunststoffschale gemäss der Linie IV-IV in Fig. 5;

Fig. 7    einen Querschnitt durch die obere Kunststoffschale
          gemäss der Linie V-V in Fig. 5.

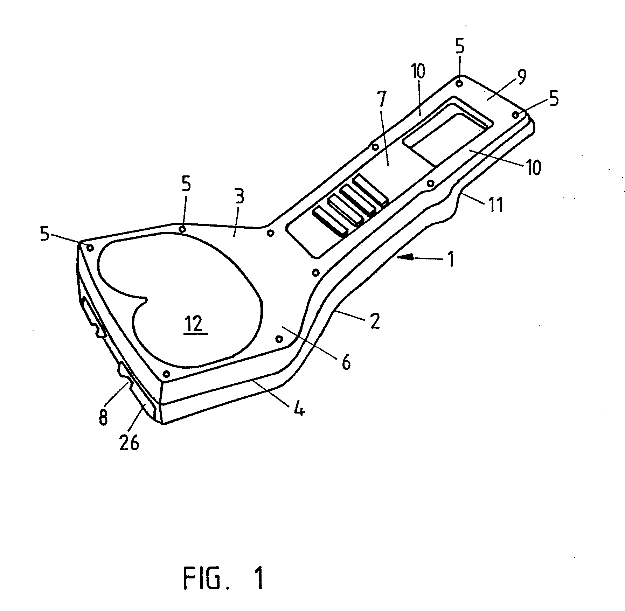

Das in Fig. 1 schaubildlich dargestellte Sportgerät 1 besteht aus einer unteren Kunststoffschale 2 und einer oberen
Kunststoffschale 3, die flächenmässig gleich gross sind
und längs einer ringsum laufenden Trennfuge 4 mit ihren umlaufenden Rändern aufeinanderliegen.

Beide längs der Ränder durch Schrauben 5 miteinander verbundene Kunststoffschalen 2 und 3 bilden zusammen einen auf
der Schneeoberfläche aufliegenden Sitzteil 6 und einen nach
vorn schräg aufwärts an den Sitzteil sich anschliessenden
Holm 7, die einen zwischen Sitzteil 6 und Holm 7 einen
stumpfen Winkel einschliessenden, formsteifen Körper bilden.
Jede der beiden Kunststoffschalen 2 und 3 umfasst demnach
den Sitzteil und den Holm in einstückiger Ausbildung als
Halbschale. Der Sitzteil 6 weist am rückwärtigen Ende eine
über die Breite des Sitzteils sich erstreckende Bremskante 8 auf. Der Holm 7 ist am freien Ende als Grifföse 9 ausgebildet. An der Grifföse 9 wird bei der Abfahrt durch Umfassen
der beiden Holmstege 10 im Bereich der Grifföse das Sportgerät gelenkt und durch Ziehen in rückwärtiger Richtung
zwecks Bremsen nach hinten gekippt, sodass die Bremskante 8
am rückwärtigen Ende zur Wirkung kommt. Die untere Kunststoffschale 2 ist im Bereich der Griffösen 9 an der Unterseite bei 11 stufenförmig nach oben hin abgesetzt, sodass
der Holm im Bereich der Griffösen 9 eine geringere Dicke
hat, womit erreicht werden soll, dass die Hände des Benutzers des Gerätes nicht über die Unterseite des an die
Grifföse sich anschliessenden Holms hinausragen, damit
sie geschützt sind. Am quer verlaufenden Teil der Grifföse 9 lässt sich das Sportgerät tragen.

Der Sitzteil 6 besitzt an der Oberseite eine anatomisch angepasste Vertiefung 12 als Sitzmulde, damit der Benutzer
nicht auf dem Sitzteil hin- und herrutscht.

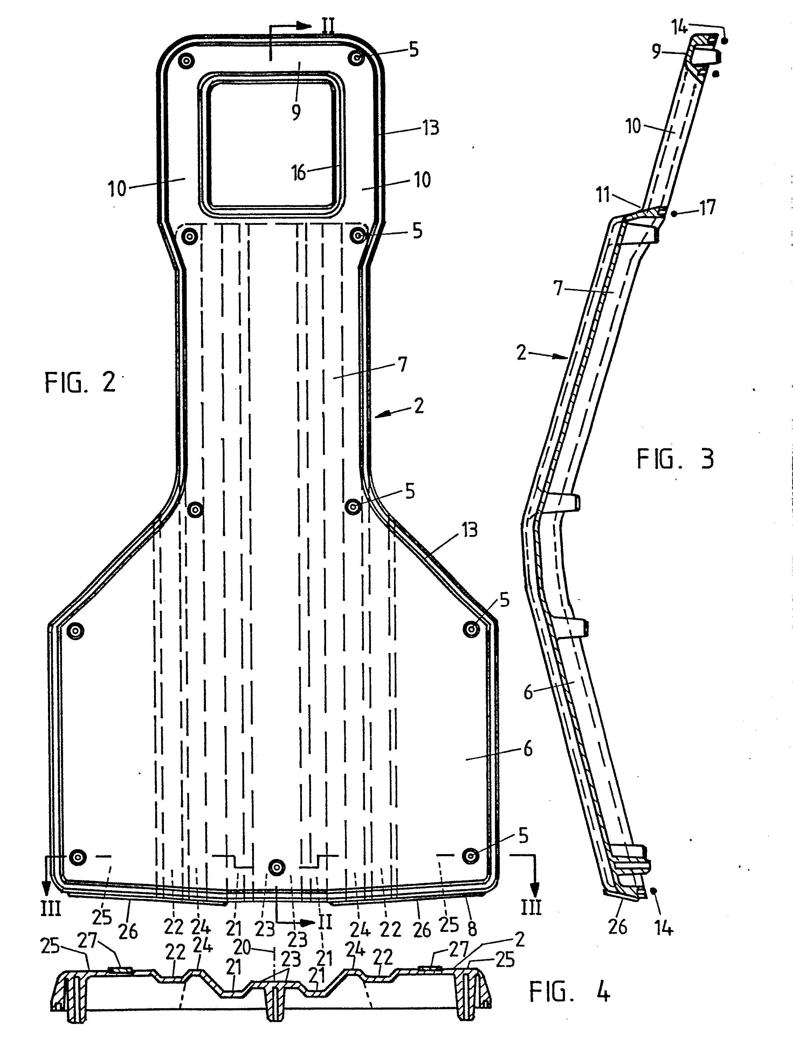

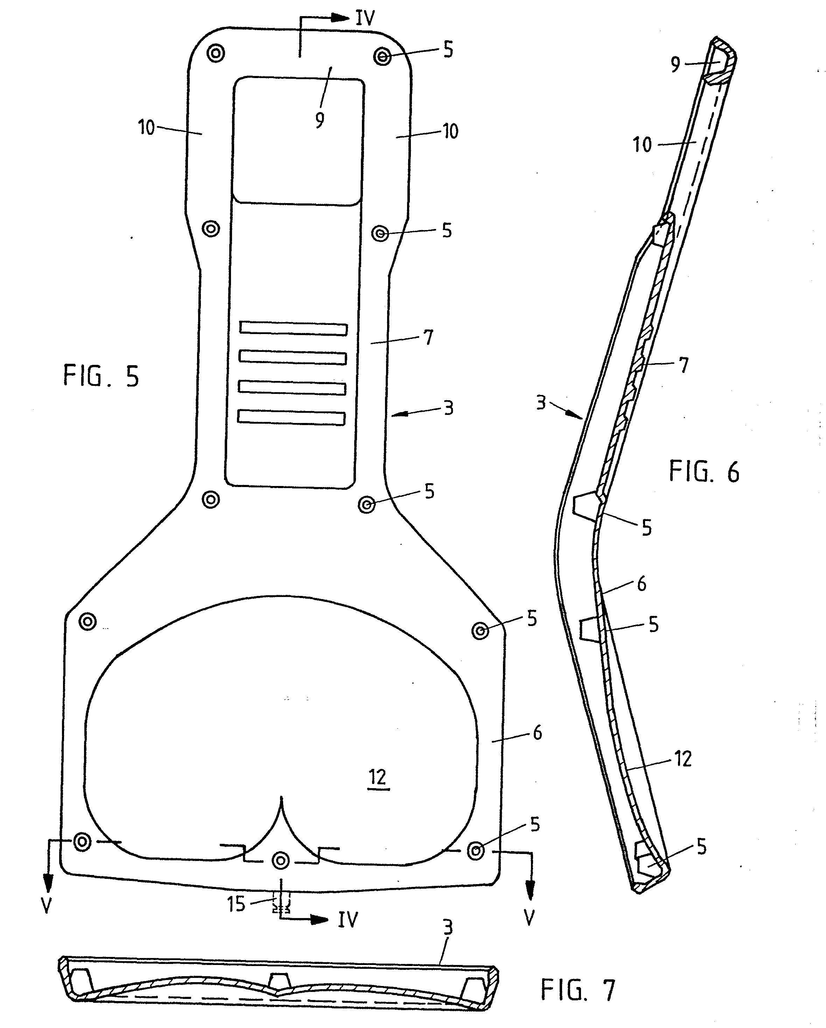

Die in Fig. 2 bis 4 dargestellte untere Kunststoffschale
weist am umlaufenden Rand eine nutförmige Rinne 13 auf, in
die eine Dichtungsschnur 14 eingelegt wird, sodass die miteinander verschraubten beiden Kunststoffschalen ein Luftvolumen luftdicht einschliessen. Unter der Belastung kann
die obere Kunststoffschale dann etwas federnd nachgeben.
Bei vollkommener Abdichtung kann der aus den Kunststoffschalen 2 und 3 bestehende Körper auch mit Druckluft aufgeblasen werden, wozu zweckmässig an der oberen Kunststoffschale 3 gemäss Fig. 5 ein Ventil 15 vorgesehen ist. Im
Bereich der Grifföse 9 muss in einer weiteren nutförmigen
Rinne 16 ebenfalls eine Dichtungsschnur 17 vorgesehen
werden.

Aus dem Querschnitt der unteren Kunststoffschale 2 gemäss
Fig. 4 ist erkennbar, dass an der Unterseite zu beiden
Seiten einer Längssymmetrielinie 20 im gleichen Abstand
ein erstes Paar von Längsrinnen 21 und in einem grösseren
Abstand von der Längssymmetrielinie 20 ein weiteres Paar
von Längsrinnen 22 ausgebildet ist. Durch diese Längsrinnen
21 und 22 ist die Unterseite in verschiedene Gleitflächen
23, 24 und 25 jeweils links und rechts von der Längssymmetrielinie 20 unterteilt, von denen die auf gegenüberliegenden Seiten jeweils im gleichen Abstand von der Längssymmetrielinie 20 angeordneten Gleitflächen, nämlich die
beiden Gleitflächen 23 sowie die beiden Gleitflächen 24 wie
auch die beiden Gleitflächen 25 jeweils auf gleichem Niveau
liegen. Dabei liegen aber mindestens die der Längssymmetrielinie 2$^0$ nächstliegenden Gleitflächen 23 mit Bezug auf den
Untergrund höher als die am weitesten aussenliegenden Gleitflächen 25. Auch die beiden Gleitflächen 24 können höher
liegen als die beiden Gleitflächen 25, sodass sich bezüglich dieser Gleitflächen eine gleichmässige Abstufung ergibt, die Gleitflächen 24 sind aber im dargestellten Beispiel gemäss Fig. 4 auf gleichem Niveau wie die Gleitflächen
25. Durch diese Abstufung wird erreicht, dass bei einer
härteren Schneeunterlage nur die tieferen Gleitflächen zum
Tragen kommen, und dass bei einer weicheren Schneeunterlage
zusätzlich dann auch die höher liegenden Gleitflächen sowie
die Längsrinnen und ihre Abschrägungen wirksam werden.

An der rückwärtigen unteren Kante 8 des Sitzteils 6 ist zur
Verhinderung eines vorzeitigen Verschleisses beim Bremsen
eine Metalleiste 26 befestigt, die in genau gleicher Weise
profiliert ist, wie die Unterseite der Kunststoffschale 2
durch die Längsrinnen 21 und 22 und Gleitflächen 23, 24 und 25, sodass sie mit anderen Worten die gleiche Kontur aufweist. Ferner können zusätzlich in die beiden äusseren Gleitflächen 25 über diese vorstehende metallische Kufen 27 eingelassen sein, die jedoch nicht in jedem Fall vorgesehen sind.

Die obere Kunststoffschale 3 gemäss Fig. 5 bis 7 ist mit der unteren Kunststoffschale 2 mittels Schrauben 5 verbunden. Sie weist an der Oberseite des Sitzteils 6 eine Sitzmulde 12 auf und kann ferner an der rückwärtigen Wand ein Ventil 15 aufweisen, wenn der Raum zwischen den beiden Kunststoffschalen unter Druckluft gesetzt werden soll, sofern eine dafür genügende Abdichtung vorgesehen wird.

Josef Schuler                        - 1 -

P a t e n t a n s p r ü c h e

1. Sportgerät bestehend aus einer gleitfähigen Sitzunterlage zum Abfahren auf schneebedeckten Hängen, dadurch
gekennzeichnet, dass ein auf der Schneeoberfläche aufzuliegen bestimmter Sitzteil (6) und ein auf dessen Längsachse
nach vorn sich anschliessender Holm (7) einen zwischen dem
Sitzteil (6) und dem schräg aufwärts gerichteten Holm (7)
einen stumpfen Winkel einschliessenden, formsteifen Körper
bilden, der am rückwärtigen Ende eine über die Breite des
genannten Sitzteils (6) sich erstreckende Bremskante (8)
aufweist und der durch nach rückwärts gerichtetes Ziehen
des Benutzers am Ende des zum Festhalten und Lenken bestimmten und als Körperschutz wirkenden Holms (7) zwecks
Wirksamwerdenlassen der Bremskante (8) nach hinten kippbar
ist.

2. Sportgerät nach Anspruch 1, dadurch gekennzeichnet,
dass der Sitzteil (6) und der von diesem nach vorn sich erstreckende Holm (7) aus einer oberen und einer unteren, jeweils flächenmässig Sitzteil und Holm umfassenden Kunststoffschale (2, 3) bestehen, die ein Luftvolumen zwischen
sich luftdicht einschliessen.

3. Sportgerät nach Anspruch 2, dadurch gekennzeichnet,
dass die untere Kunststoffschale (2) im Bereich des auf der
Schneeoberfläche aufzuliegen bestimmten Sitzteils (6) unterseitig eine Mehrzahl von durch beidseits der Längsachse
spiegelsymmetrisch gleich angeordnete Längsrinnen (21, 22)
getrennten Gleitflächen (23, 24, 25) aufweist, von denen
auf gegenüberliegenden Seiten im gleichen Abstand  von der Längssymmetrielinie (20) angeordnete Gleitflächen auf gleichem Niveau liegen und mindestens die der Längssymmetrielinie (20) nächstliegenden Gleitflächen (23) höher liegen als die am weitesten aussenliegenden Gleitflächen (25).

4. Sportgerät nach Anspruch 2, dadurch gekennzeichnet, dass die Kunststoffschalen (2, 3) miteinander verschraubt sind und zwischen ihren umlaufenden Rändern eine Dichtungsschnur (14) eingeklemmt gehalten ist.

5. Sportgerät nach Anspruch 2, dadurch gekennzeichnet, dass eine der Kunststoffschalen (3) am rückwärtigen Seitenbord ein Ventil (15) zum Einpressen von Druckluft zwischen die Kunststoffschalen (2, 3) aufweist.

6. Sportgerät nach Anspruch 1, dadurch gekennzeichnet, dass der Holm (7) am freien Ende als Grifföse (9) ausgebildet ist.

7. Sportgerät nach Anspruch 6, dadurch gekennzeichnet, dass die Unterseite des Holms (7) im Bereich der Grifföse (9) stufenförmig abgesetzt ist.

8. Sportgerät nach Anspruch 2, dadurch gekennzeichnet, dass an der rückwärtigen unteren Kante (8) der unteren Kunststoffschale (2) eine Metalleiste (26) als Verschleiss-Schutz beim Bremsen festgeschraubt ist.

9. Sportgerät nach Anspruch 2 und 3, dadurch gekennzeichnet, dass in der Unterseite der unteren Kunststoffschale (2) metallische Kufen (27) in die jeweils am weitesten aussen von der Längssymmetrielinie (20) liegenden Gleitflächen (25) eingelassen sind.

10. Sportgerät nach Anspruch 2, dadurch gekennzeichnet, dass die obere Kunststoffschale oberseitig eine Vertiefung (12) als Sitzmulde aufweist.

11. Sportgerät nach Anspruch 2, dadurch gekennzeichnet, dass die Kunststoffschalen (2, 3) aus Polyäthylen bestehen.

FIG. 1

0115297

2/3

FIG. 2

FIG. 3

FIG. 4

0115297

3/3

FIG. 5

FIG. 6

FIG. 7